# EUROPÄISCHE PATENTSCHRIFT

(11) **EP 1 690 820 B1**
(45) Veröffentlichungstag und Bekanntmachung des Hinweises auf die Patenterteilung: **27.07.2011**
(21) Anmeldenummer: 06002759.6
(22) Anmeldetag: 10.02.2006
(51) Int. Cl.: B66C 13/56, B60L 3/02

(54) **Flurförderzeug mit einem Lenkgeber**
Industrial truck comprising a steering
Chariot de manutention avec direction

(30) Priorität: 15.02.2005 DE 102005006855
(43) Veröffentlichungstag der Anmeldung: 16.08.2006
(73) Patentinhaber: OM Carrelli Elevatori S.p.A., 20020 Lainate (MI) (IT)
(72) Erfinder: Hoock, Michael, 22299 Hamburg (DE)
(74) Vertreter: Geirhos, Johann

(56) Entgegenhaltungen:
- DE-A1- 19 732 511
- GB-A- 599 585
- US-A- 5 112 184

## Beschreibung

Die Erfindung betrifft ein Flurförderzeug, insbesondere Kommissionierfahrzeug, mit einem als drehbaren Lenker ausgebildeten Lenkgeber, der zwei bezüglich einer Drehachse des Lenkgebers im wesentlichen symmetrisch angeordnete Handgriffe aufweist, und einer Totmannbremseinrichtung, die mindestens einen mittels eines Betätigungsorgans betätigbaren Totmannschalter aufweist, der mit einer Bremsvorrichtung des Flurförderzeugs in Wirkverbindung steht.

Aus der GB-A-599 585 ist ein als Lenkrad ausgebildeter Lenkgeber für ein Elektrofahrzeug mit einer Totmannbremseinrichtung bekannt. Das Lenkrad weist einen Lenkkranz auf, der aus einem Unterteil und einem bewegbaren Oberteil besteht, wobei das Oberteil als Betätigungsorgan eines im Unterteil angeordneten Totmannschalters ausgebildet ist.

Aus der DE 197 32 511 A1 ist ein deichselgelenktes Flurförderzeug bekannt, bei dem bei senkrechter und horizontaler Deichselstellung eine Totmannbremseinrichtung betätigbar ist, um das Flurförderzeug abzubremsen.

Die US-A-5 112 184 offenbart einen Betätigungshebel für hydraulische Steuerventile, die hydraulische Verbraucher ansteuern. In dem Handgriff des Betätigungshebels ist ein Bügel angeordnet, bei dessen Betätigung über ein Kabel ein hydraulisches Sicherheitsventil betätigt wird, das die Druckmittelversorgung zu den Steuerventilen herstellt, so dass bei einer Betätigung des Bügels und anschließender Betätigung des Betätigungshebels die hydraulischen Verbraucher betätigt werden können.

Ein als Lenker mit zwei Handgriffen ausgebildeter Lenkgeber eines Flurförderzeugs ist in der DE 196 15168 A1 offenbart und ermöglicht eine ergonomische Bedienung eines als Kommissionierer ausgebildeten Flurförderzeugs.

Ein gattungsgemäßes Flurförderzeug ist aus der DE 197 43 735 A1 bekannt. Das als Kommissionierfahrzeug ausgebildete Flurförderzeug weist einen als Lenker ausgebildeten Lenkgeber auf und einen in einer Fahrerstandplattform angeordneten Totmannschalter einer Totmannbremseinrichtung, der von der Bedienperson mit dem Fuß betätigbar ist. Der Aufbau eines derartigen Totmannschalters ist in der DE 101 03 536 A1 offenbart. Zur Betätigung des Totmannschalters ist hierbei ein in der Fahrerstandplattform schwenkbar angeordnetes, als Betätigungsfläche ausgebildetes Betätigungsorgan vorgesehen. Bei gattungsgemäßen Flurförderzeugen bewirkt ein Loslassen des Betätigungsorgans und somit ein Beenden der Betätigung des Totmannschalters ein Abbremsen des Flurförderzeugs. Bei betätigtem Betätigungsorgan und somit betätigtem Totmannschalter kann der Fahrantrieb des Flurförderzeugs betrieben werden. Die Anordnung des Totmannschalters in der Fahrerstandplattform ergibt jedoch durch die Betätigung des Betätigungsorgans des Totmannschalters durch den Fuß der Bedienperson während des Betriebs des Flurförderzeugs eine eingeschränkte Bewegungsfreiheit der Bedienperson, wodurch sich bei länger andauerndem Betrieb des Flurförderzeugs eine ungünstige Ergonomie ergeben kann. Zudem ist zum Betrieb des Fahrantriebs erforderlich, dass sich die Bedienperson auf der Fahrerstandplattform befindet, um das Betätigungsorgan des Totmannschalters betätigen zu können. Hierdurch ergibt sich jedoch ein häufiges Auf- und Absteigen der Bedienperson im Betrieb des Flurförderzeugs, selbst wenn nur kurze Fahrstrecken von wenigen Metern zu überbrücken sind. Darüber hinaus ergibt sich durch die Anordnung des Totmannschalters in der Fahrerstandplattform und der zur Betätigung des Totmannschalters erforderlichen, in der Fahrerstandplattform schwenkbar gelagerten Betätigungsfläche ein hoher Bauaufwand für das Betätigungsorgan des Totmannschalters.

Der vorliegenden Erfindung liegt die Aufgabe zugrunde, ein Flurförderzeug der eingangs genannten Gattung zur Verfügung zu stellen, das bei günstiger Ergonomie einen verbesserten Betrieb des Flurförderzeugs bei einem geringen Bauaufwand für das Betätigungsorgan des Totmannschalters ermöglicht.

Diese Aufgabe wird erfindungsgemäß dadurch gelöst, dass das Betätigungsorgan des Totmannschalters im Lenkgeber angeordnet ist, wobei in jedem Handgriff des Lenkers ein Betätigungsorgan eines Totmannschalters angeordnet ist. Der Lenkgeber ist als drehbarer Lenker ausgebildet, der zwei bezüglich einer Drehachse des Lenkgebers im wesentlichen symmetrisch angeordnete Handgriffe aufweist, wobei in jedem Handgriff des Lenkers ein Betätigungsorgan eines Totmannschalters angeordnet ist. Das Betätigungsorgan des Totmannschalters kann in dem Handgriff des Lenkgebers mit geringem Bauaufwand angeordnet werden. Zudem ist hierbei das Betätigungsorgan und somit der Totmannschalter durch Umgreifen des Handgriffs des Lenkgebers von der Bedienperson betätigbar, wodurch ein Betrieb des Fahrantriebs des Flurförderzeugs bei günstiger Ergonomie zur Betätigung des Betätigungsorgans für die Bedienperson erzielbar ist. Durch jeweils ein in einem Handgriff angeordnetes Betätigungsorgan ist hierbei auf ergonomisch günstige Weise eine Betätigung des Totmannschalters erzielbar. Durch eine Anordnung und somit Integration des Betätigungsorgan des Totmannschalters der Totmannbremseinrichtung in den Lenkgeber kann im Betrieb des Flurförderzeugs eine hohe Bewegungsfreiheit der Bedienperson und somit eine günstige Ergonomie erzielt werden. Zudem kann durch die Anordnung des Betätigungsorgans des Totmannschalters im Lenkgeber ein Betrieb des Fahrantriebs des Flurförderzeugs ermöglicht werden, wenn sich die Bedienperson neben dem Flurförderzeug befindet und die Bedienperson das Betätigungsorgan und somit den Totmannschalter am Lenkgeber betätigt. Das Flurförderzeug kann somit - ohne dass die Bedienperson zur Betätigung des Betätigungsorgans des Totmannschalters und somit zur Betätigung des Fahrantriebs auf das Flurförderzeug auf- und absteigen muss - über kurze Fahrstrecken betrieben werden. Insbesondere bei Kommissionierfahrzeugen, bei denen im Betrieb häufig kurze Fahrstecken auftreten, ergibt sich somit ein verbesserter Betrieb des Flurförderzeugs. Darüber hinaus weist ein im Lenkgeber integriertes Betätigungsorgan des Totmannschalters gegenüber einem in der Fahrerstandplattform gelenkig gelagerten, als Betätigungsfläche ausgebildeten Betätigungsorgans einen verringerten Bauaufwand auf.

Der Totmannschalter kann am Lenkgeber getrennt von dem Handgriff angeordnet sein. Besondere Vorteile ergeben sich, wenn der Totmannschalter im Handgriff des Lenkgebers angeordnet ist. Durch die Integration des Totmannschalters und des Betätigungsorgans des Totmannschalters in den Handgriff des Lenkgebers kann ein einfacher Aufbau mit geringem Bauaufwand erzielt werden und der Bauraum des Lenkgebers neben dem Handgriff zur Anordnung weiterer Bedienelemente des Flurförderzeugs genutzt werden, beispielsweise eines Drehschalters für den Fahrantrieb oder eines Tastschalters für den Hubantrieb des Flurförderzeugs.

Gemäß einer bevorzugten Ausführungsform der Erfindung ist das Betätigungsorgan als in dem Handgriff angeordneter Tastbügel ausgebildet ist. Mit einem als Tastbügel ausgebildetes Betätigungsorgan des Totmannschalters kann von der Bedienperson auf einfache Weise durch ein Umgreifen der den Handgriff greifenden Hand eine ergonomische Betätigung des Betätigungsorgans und somit des Totmannschalters erzielt werden, um einen Betrieb des Fahrantriebs zu ermöglichen.

Eine vorteilhafte Ausgestaltungsform der Erfindung sieht vor, dass der Totmannschalter als ein mittels eines Betätigungselements betätigbarer elektrischer Schalter ausgebildet ist, wobei das Betätigungsorgan mit einer das Betätigungselement betätigbaren Betätigungseinrichtung versehen ist. Durch diese Bauweise kann mit dem Betätigungsorgan auf einfache Weise der Totmannschalter betätigt werden.

Zweckmäßigerweise ist hierbei das Betätigungselement des elektrischen Schalters als Bügel und die Betätigungseinrichtung als an dem Betätigungsorgan angeordnete Schräge ausgebildet. Das als Tastbügel ausgebildete Betätigungsorgan kann auf einfache Weise mit einer Schräge versehen werden, die eine Betätigung des Bügels des Totmannschalters ermöglicht, wodurch sich ein geringer Bauaufwand ergibt.

Gemäß einer bevorzugten Weiterbildung der Erfindung ist im Handgriff ein mit dem Betätigungsorgan in Wirkverbindung stehendes Federelement angeordnet ist, das einer Betätigung des Betätigungsorgans entgegenwirkt. Beim Loslassen des Handgriffes wird somit sichergestellt, dass das Betätigungsorgan durch das Federelement in eine Stellung beaufschlagt wird, in der mittels des unbetätigten Totmannschalters ein Abbremsen des Flurförderzeugs erzielt wird.

Besondere Vorteile ergeben sich, wenn gemäß einer vorteilhaften Weiterbildung der Erfindung die Totmannbremseinrichtung zwei Totmannschalter aufweist, wobei in dem Lenkgeber für jeden Totmannschalter ein Betätigungsorgan angeordnet ist. Durch die Anordnung von zwei mittels jeweils eines Betätigungsorgans betätigbarer Totmannschalter im Lenkgeber kann ein weiter verbesserter Betrieb des Flurförderzeugs durch eine Steuerung des Fahrantriebs in Abhängigkeit von der Betätigung der beiden Totmannschalter erzielt werden.

Sofern hierbei gemäß einer bevorzugten Ausführungsform der Erfindung die Totmannschalter mit einer Steuereinrichtung in Wirkverbindung stehen, kann ein verbesserter Betrieb des Flurförderzeugs erzielt werden, wenn bei Betätigung eines Betätigungsorgans mittels der Steuereinrichtung der Fahrantrieb mit einer reduzierten maximalen Fahrgeschwindigkeit betreibbar ist. Sofern sich die Bedienperson neben dem Flurförderzeug befindet und lediglich ein Betätigungsorgan und somit einen Totmannschalter durch Umgreifen eines Handgriffes des Lenkers betätigt, kann der Fahrantrieb mit einer reduzierten maximalen Fahrgeschwindigkeit betrieben werden, so dass ein Betrieb des Flurförderzeugs bei einer neben dem Flurförderzeug stehenden oder laufenden Bedienperson mit reduzierter maximaler Fahrgeschwindigkeit ermöglicht wird. Durch die reduzierte maximale Fahrgeschwindigkeit wird in einem derartigen Betriebszustand ein sicherer Betrieb des Flurförderzeugs sichergestellt

Gemäß einer bevorzugten Weiterbildung ist hierbei bei der Betätigung beider Betätigungsorgane mittels der Steuereinrichtung der Fahrantrieb mit einer maximalen Fahrgeschwindigkeit betreibbar ist. Bei einer gleichzeitigen oder nacheinander erfolgenden Betätigung beider Betätigungsorgane und somit beider Totmannschalter durch Umgreifen beider Handgriffe des Lenkers kann das Vorhandensein der Bedienperson auf dem Flurförderzeug, beispielsweise auf einer Fahrerstandplattform, auf einfache Weise ermittelt werden und somit der Betrieb des Flurförderzeugs mit der maximalen Fahrgeschwindigkeit zugelassen werden.

Sofern hierbei gemäß einer bevorzugten Weiterbildung der Erfindung bei der Betätigung beider Betätigungsorgane und anschließendem Loslassen eines Betätigungsorgans mittels der Steuereinrichtung der Fahrantrieb mit der maximalen Fahrgeschwindigkeit betreibbar bleibt, wird verhindert, dass das Flurförderzeug in einem Betriebszustand, bei dem sich die Bedienperson auf dem Flurförderzeug befindet und beide Betätigungsorgane betätigt, durch das anschließende Loslassen eines Handgriffes und somit dem Beenden der Betätigung eines Betätigungsorgans und somit dem Beenden der Betatigung eines Totmannschalters ein Abbremsen des Flurförderzeugs auf die reduzierte maximale Fahrgeschwindigkeit erfolgt. Hierdurch wird erzielt, dass das Flurförderzeug mit der maximalen Fahrgeschwindigkeit betreibbar bleibt, wenn sich die Bedienperson auf dem Flurförderzeug befindet und nach der Betätigung beider Betätigungsorgane eine Hand von einem Handgriff des Lenkgebers nimmt. Es wird somit ermöglicht, dass die auf dem Flurförderzeug befindliche Bedienperson eine Hand frei hat, um weitere Bedienungsfunktionen auszuführen, wobei das Flurförderzeug mit der maximalen Fahrgeschwindigkeit betreibbar bleibt.

In zweckmäßiger Weiterbildung der Erfindung ist vorgesehen, dass beim Loslassen beider Betätigungsorgane mittels der Steuereinrichtung die Bremsvorrichtung zum Abbremsen des Flurförderzeugs betätigbar ist. Hierdurch wird auf einfache Weise sichergestellt, dass beim Loslassen beider Betätigungsorgane und somit beider Handgriffe mittels der unbetätigten Totmannschalter ein Abbremsen des Flurförderzeugs erzielt wird:

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung eines als Lenker ausgebildeten Lenkgebers eines erfindungsgemäßen Flurförderzeugs,
- Figur 2: den Schnitt durch einen Handgriff des Lenkers und
- Figur 3: den Schnitt gemäß der Figur 2 in einer vergrößerten Darstellung.

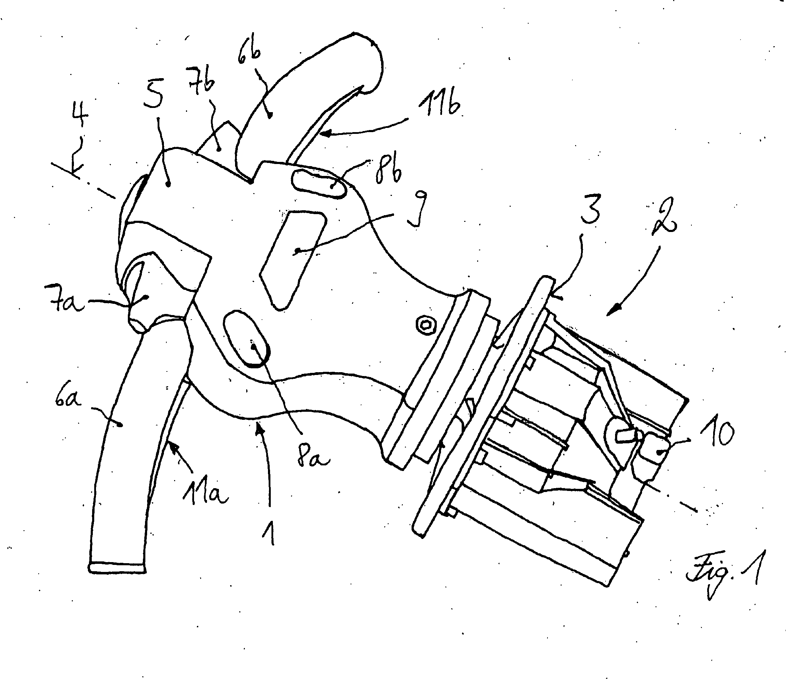

In der Figur 1 ist eine perspektivische Darstellung eines als Lenker 1 ausgebildeten Lenkgebers 2 für ein beispielsweise als Kommissionierer ausgebildetes und nicht mehr dargestelltes Flurförderzeug dargestellt. Der Lenker 1 ist mit einem Flansch 3 zur Befestigung an einer an einer Fahrerstandplattform für die Bedienperson ausgebildeten Brüstung des Kommissionierers versehen.

Der Lenker 1 ist um eine mittige Drehachse 4 drehbar und weist einen mittleren Abschnitt 5 auf, an dem zwei zur Drehachse 4 symmetrisch angeordnete Handgriffe 6a, 6b angeordnet sind. Der Handgriff 6b kann hierbei von der linken Hand der Bedienperson und der Handgriff 6a von der rechten Hand der Bedienperson umgriffen werden. In dem mittleren Abschnitt 5 des Lenkers 1 sind weitere Bedienelemente des Flurförderzeugs angeordnet, beispielsweise die Fahrgeschwindigkeit und die Fahrtrichtung vorgebende Drehschalter 7a, 7b für den Fahrantriebs, Tastschalter 8a, 8b für den Hubantrieb und ein Tastschalter 9 für ein Warneinrichtung, beispielsweise eine Hupe. Mittels einer Sensoreinrichtung 10 ist die Drehbewegung des Lenkers 1 zur Steuerung des Lenkantriebs des Flurförderzeugs erfassbar.

Erfindungsgemäß ist im Lenkgeber 2 in den Handgriffen 6a, 6b des Lenkers 1 im Griffbereich der den Handgriff umgreifenden Hand der Bedienperson jeweils ein Betätigungsorgan 11 a, 11 b eines Totmannschalters angeordnet.

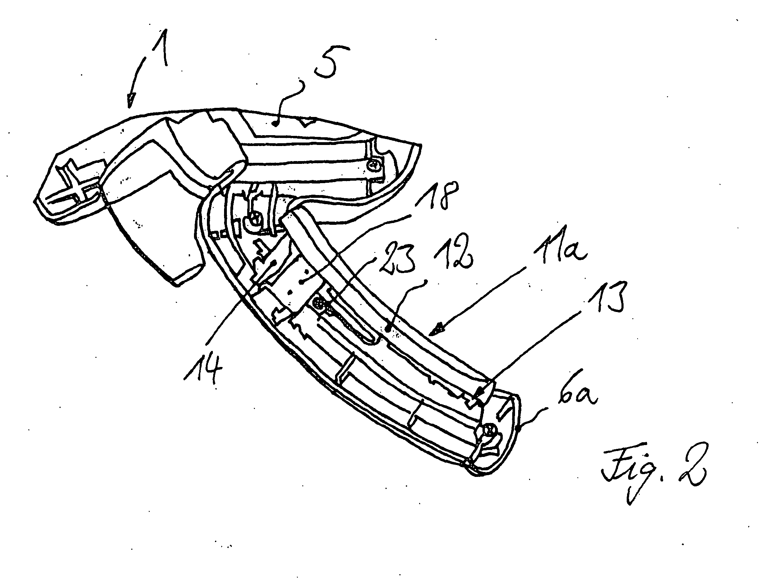

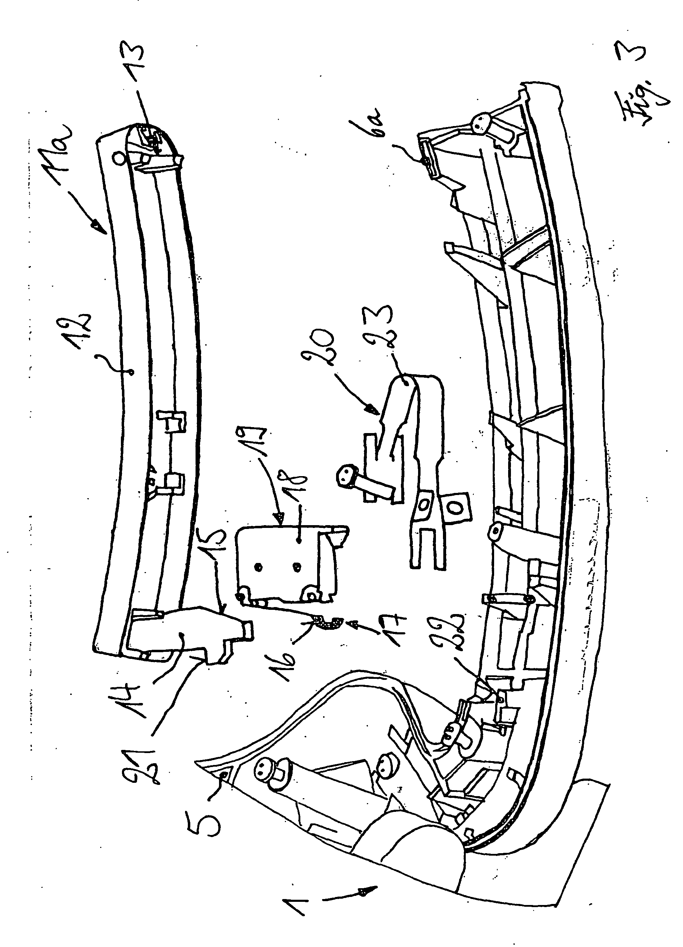

In den Figuren 2 und 3 ist der Aufbau des Handgriffes 6a dargestellt. Der Handgriff 6b weist einen identischen Aufbau auf.

Das in dem Handgriff 6a angeordnete Betätigungsorgan 11a ist als ein von der Hand der Bedienperson beim Umgreifen des Handgriffs 6a betätigbarer Tastbügel 12 ausgebildet, der sich in Längsrichtung des Handgriffes 6a über den Griffbereich erstreckt und am äußeren Bereich des Handgriffes 6a um eine Drehachse 13 schwenkbar angeordnet ist. Der Tastbügel 12 ist an dem dem mittleren Abschnitt 5 der Lenkers 1 zugewandten Bereich mit einer Betätigungseinrichtung 14 versehen, an der eine Schräge 15 ausgebildet ist. Mittels der Schräge 15 ist ein als Bügel 16 ausgebildetes Betätigungselement 17 des von einem elektrischen Schalter 18 gebildeten Totmannschalters 19 betätigbar, der im Handgriff 6a angeordnet ist.

In dem Handgriff 6a ist weiterhin ein als Bügelfeder 23 ausgebildetes Federelement 20 angeordnet, das mit dem Tastbügel 12 in Wirkverbindung steht und der Betätigung des Tastbügels 12 durch die Hand der Bedienperson entgegenwirkt.

An dem Betätigungselement 14 des Tastbügels 12 ist gegenüberliegend zur Schräge 15 eine Anschlagfläche 21 ausgebildet, die mit einem Anschlagelement 22 im Handgriff 6a in Wirkverbindung bringbar ist, um die Beaufschlagung des Tastbügels 12 durch das Federelement 20 zu begrenzen.

Der Tastbügel 12 wird durch das Federelement 20 bei unbetätigtem Betätigungsorgan 11a, 11b in eine Schaltstellung beaufschlagt, in der der unbetätigte Totmannschalter 19 ein Signal zur Beaufschlagung der Bremsvorrichtung und somit zum Abbremsen des Flurförderzeugs erzeugt. Bei einer Betätigung des Tastbügels 12 durch ein Umgreifen der den Handgriff 6a greifenden Hand der Bedienperson wird der Totmannschalter 19 ebenfalls betätigt, wodurch die Betätigung der Bremsvorrichtung beendet wird und der Fahrantrieb des Flurförderzeugs betreibbar ist.

Bei einem erfindungsgemäßen Lenker 1 mit jeweils einem in den beiden Handgriffen 6a, 6b angeordneten und mittels jeweils eines Tastbügels 12 betätigbaren Totmannschalters 19 stehen die beiden Totmannschalter 19 mit einer Steuereinrichtung in folgender Weise in Wirkverbindung:

Bei losgelassenen Handgriffen 6a, 6b und somit bei nicht betätigten Tastbügeln 12 ist durch die Signale der unbetätigten Totmannschalter mittels der Steuereinrichtung die Bremsvorrichtung zum Abbremsen des Flurförderzeugs beaufschlagt.

Wird ausgehend hiervon von der Bedienperson durch Umgreifen eines Handgriffes 6a bzw. 6b mit einer Hand lediglich ein Tastbügel 12 und somit ein Totmannschalter 19 betätigt, ist der Fahrantrieb mit einer reduzierten maximalen Fahrgeschwindigkeit betreibbar. Lässt die Bedienperson den Handgriff 6a bzw. 6b los, wird über den federbeaufschlagten Tastbügel 12 die Betätigung des Totmannschalters 19 beendet und das Flurförderzeug abgebremst. Somit ist ein Betrieb des Fahrantriebs des Flurförderzeugs bei neben dem Flurförderzeug stehender bzw. neben dem Fahrzeug laufender Bedienperson, wobei die Bedienperson lediglich mit einer Hand einen Handgriff 6a bzw. 6b umgreift, mit reduzierter maximaler Fahrgeschwindigkeit ermöglicht.

Werden beide Tastbügel 12 gleichzeitig oder nacheinander durch Umgreifen beider Handgriff 6a, 6b mit beiden Händen gedrückt und somit beide Totmannschalter 19 betätigt, ist der Fahrantrieb mit maximaler Fahrgeschwindigkeit betreibbar. Durch das Betätigen beider Tastbügel 12 kann hierbei bei auf dem Flurförderzeug befindlicher Bedienperson ein Betrieb des Flurförderzeugs mit maximaler Fahrgeschwindigkeit ermoglicht werden.

Lässt die Bedienperson hierbei einen Handgriff 6a bzw. 6b los und wird somit über den zugeordneten federbeaufschlagten Tastbügel 12 die Betätigung eines Totmannschalters 19 beendet, bleibt der Betrieb des Fahrantriebs mit maximaler Fahrgeschwindigkeit erhalten. Die auf dem Flurförderzeug befindliche Bedienperson kann somit eine Hand von dem Lenker 1 nehmen, um weitere Bedienfunktionen zu betätigen, wobei das Flurförderzeug mit maximaler Fahrgeschwindigkeit betreibbar bleibt.

Nimmt die Bedienperson weiterhin die zweite Hand von dem Lenker 1 und wird somit durch Loslassen des zweiten Tastbügels 12 weiterhin die Betätigung des zweiten Totmannschalters 19 beendet, wird das Flurförderzeug durch Beaufschlagung der Bremsvorrichtung abgebremst.

## Patentansprüche

1. Flurförderzeug, insbesondere Kommissionierfahrzeug, mit einem als drehbaren Lenker ausgebildeten Lenkgeber, der zwei bezüglich einer Drehachse des Lenkgebers im wesentlichen symmetrisch angeordnete Handgriffe aufweist, und einer Totmannbremseinrichtung, die mindestens einen mittels eines Betätigungsorgans betätigbaren Totmannschalter aufweist, der mit einer Bremsvorrichtung des Flurförderzeugs in Wirkverbindung steht, **dadurch gekennzeichnet, dass** das Betätigungsorgan (11a; 11b) des Totmannschalters (19) im Lenkgeber (2) angeordnet ist, wobei in jedem Handgriff (6a, 6b) des Lenkers (1) ein Betätigungsorgan (11a, 11b) des Totmannschalters (19) angeordnet ist.

2. Flurförderzeug nach Anspruch 1, **dadurch gekennzeichnet, dass** der Totmannschalter (19) im Handgriff (6a; 6b) des Lenkgebers (2) angeordnet ist.

3. Flurförderzeug nach Anspruch 1 oder 2, **dadurch gekennzeichnet, dass** das Betätigungsorgan (11a; 11 b) als in dem Handgriff (6a; 6b) angeordneter Tastbügel (12) ausgebildet ist.

4. Flurförderzeug nach einem der Ansprüche 1 bis 3, **dadurch gekennzeichnet, dass** der Totmannschalter (19) als ein mittels eines Betätigungselements (17) betätigbarer elektrischer Schalter (18) ausgebildet ist, wobei das Betätigungsorgan (11 a; 11 b) mit einer das Betätigungselement (17) betätigbaren Betätigungseinrichtung (14) versehen ist.

5. Flurförderzeug nach Anspruch 4, **dadurch gekennzeichnet, dass** das Betätigungselement (17) des elektrischen Schalters (18) als Bügel (16) und die Betätigungseinrichtung (14) als an dem Betätigungsorgan (11a; 11b) angeordnete Schräge (15) ausgebildet ist.

6. Flurförderzeug nach einem der Ansprüche 1 bis 5, **dadurch gekennzeichnet, dass** im Handgriff (6a; 6b) ein mit dem Betätigungsorgan (11a; 11b) in Wirkverbindung stehendes Federelement (20) angeordnet ist, das einer Betätigung des Betätigungsorgans (11a; 11b) entgegenwirkt.

7. Flurförderzeug nach einem der Ansprüche 1 bis 6, **dadurch gekennzeichnet, dass** die Totmannbremseinrichtung zwei Totmannschalter (19) aufweist, wobei in dem Lenkgeber (2) für jeden Totmannschalter (19) ein Betätigungsorgan (11a, 11b) angeordnet ist.

8. Flurförderzeug nach Anspruch 7, **dadurch gekennzeichnet, dass** die Totmannschalter (19) mit einer Steuereinrichtung in Wirkverbindung stehen, wobei bei Betätigung eines Betätigungsorgans (11a; 11b) mittels der Steuereinrichtung der Fahrantrieb mit einer reduzierten maximalen Fahrgeschwindigkeit betreibbar ist.

9. Flurförderzeug nach Anspruch oder 8, **dadurch gekennzeichnet, dass** bei der Betätigung beider Betätigungsorgane (11a, 11b) mittels der Steuereinrichtung der Fahrantrieb mit einer maximalen Fahrgeschwindigkeit betreibbar ist.

10. Flurförderzeug nach einem der Ansprüche 7 bis 9, **dadurch gekennzeichnet, dass** bei Betätigung beider Betätigungsorgane (11a, 11b) und anschließendem Loslassen eines Betätigungsorgans (11a; 11b) mittels der Steuereinrichtung der Fahrantrieb mit der maximalen Fahrgeschwindigkeit betreibbar bleibt.

11. Flurförderzeug nach einem der Ansprüche 7 bis 10, **dadurch gekennzeichnet, dass** beim Loslassen beider Betätigungsorgane (11a, 11b) mittels der Steuereinrichtung die Bremsvorrichtung zum Abbremsen des Flurförderzeugs beaufschlagbar ist.

## Claims

1. Industrial truck, in particular order picker, with a steering transducer, which is in the form of a rotatable handlebar, and has two handles which are arranged substantially symmetrically with respect to an axis of rotation of the steering transducer, and a dead man's brake device, which has at least one dead man's switch, which can be actuated by means of an actuating member and is operatively connected to a brake apparatus of the industrial truck, **characterized in that** the actuating member (11a; 11b) of the dead man's switch (19) is arranged in the steering transducer (2), an actuating member (11a, 11b) of the dead man's switch (19) being arranged in each handle (6a, 6b) of the handlebar (1).

2. Industrial truck according to Claim 1, **characterized in that** the dead man's switch (19) is arranged in the handle (6a; 6b) of the steering transducer (2).

3. Industrial truck according to Claim 1 or 2, **characterized in that** the actuating member (11a; 11b) is in the form of a bow-like pushbutton (12), which is arranged in the handle (6a; 6b).

4. Industrial truck according to one of Claims 1 to 3, **characterized in that** the dead man's switch (19) is in the form of an electrical switch (18), which can be actuated by means of an actuating element (17), the actuating member (11a; 11b) being provided with an actuating device (14) capable of actuating the actuating element (17).

5. Industrial truck according to Claim 4, **characterized in that** the actuating element (17) of the electrical switch (18) is in the form of a bow (16) and the actuating device (14) is in the form of a bevel (15) arranged on the actuating member (11a; 11b).

6. Industrial truck according to one of Claims 1 to 5, **characterized in that** a spring element (20), which is operatively connected to the actuating member (11a; 11b) and counteracts an actuation of the actuating member (11a; 11b), is arranged in the handle (6a; 6b).

7. Industrial truck according to one of Claims 1 to 6, **characterized in that** the dead man's brake device has two dead man's switches (19), with an actuating member (11a, 11b) being arranged in the steering transducer (2) for each dead man's switch (19).

8. Industrial truck according to Claim 7, **characterized in that** the dead man's switch (19) is operatively connected to a control device, it being possible for the traction drive to be operated at a reduced maximum driving speed upon actuation of an actuating member (11a; 11b) by means of the control device.

9. Industrial truck according to Claim 7 or 8, **characterized in that** the traction drive can be operated at a maximum driving speed upon actuation of the two actuating members (11a, 11b) by means of the control device.

10. Industrial truck according to one of Claims 7 to 9, **characterized in that** the traction drive continues to be capable of being operated at the maximum driving speed upon actuation of the two actuating members (11a, 11b) and subsequent release of an actuating member (11a; 11b) by means of the control device.

11. Industrial truck according to one of Claims 7 to 10, **characterized in that** the brake apparatus can be acted upon so as to brake the industrial truck when both actuating members (11a, 11b) are released by means of the control device.

## Revendications

1. Chariot de manutention, en particulier chariot de préparation des commandes, avec une direction se présentant sous la forme d'un guidon rotatif, qui présente deux poignées disposées de façon essentiellement symétrique par rapport à un axe de rotation de la direction, et un dispositif de frein d'homme mort, qui présente au moins un interrupteur d'homme mort pouvant être actionné au moyen d'un organe d'actionnement et qui se trouve en liaison active avec un dispositif de freinage du chariot élévateur, **caractérisé en ce que** l'organe d'actionnement (11a; 11b) de l'interrupteur d'homme mort (19) est disposé dans la direction (2), dans lequel un organe d'actionnement (11a, 11b) de l'interrupteur d'homme mort (19) est disposé dans chaque poignée (6a, 6b) du guidon (1).

2. Chariot de manutention selon la revendication 1, **caractérisé en ce que** l'interrupteur d'homme mort (19) est disposé dans la poignée (6a; 6b) de la direction (2) .

3. Chariot de manutention selon la revendication 1 ou 2, **caractérisé en ce que** l'organe d'actionnement (11a; 11b) se présente sous la forme d'un bouton poussoir allongé (12) disposé dans la poignée (6a; 6b).

4. Chariot de manutention selon l'une quelconque des revendications 1 à 3, **caractérisé en ce que** l'interrupteur d'homme mort (19) se présente sous la forme d'un interrupteur électrique (18) pouvant être actionné au moyen d'un élément d'actionnement (17), dans lequel l'organe d'actionnement (11a; 11b) est muni d'un dispositif d'actionnement (14) pouvant actionner l'élément d'actionnement (17).

5. Chariot de manutention selon la revendication 4, **caractérisé en ce que** l'élément d'actionnement (17) de l'interrupteur électrique (18) se présente sous la forme d'un étrier (16) et le dispositif d'actionnement (14) se présente sous la forme d'une rampe (15) disposée sur l'organe d'actionnement (11a 11b).

6. Chariot de manutention selon l'une quelconque des revendications 1 à 5, **caractérisé en ce qu'**un élément de ressort (20) se trouvant en liaison active avec l'organe d'actionnement (11a; 11b) est disposé dans la poignée (6a; 6b), et s'oppose à un actionnement de l'organe d'actionnement (11a; 11b).

7. Chariot de manutention selon l'une quelconque des revendications 1 à 6, **caractérisé en ce que** le dispositif de frein d'homme mort présente deux interrupteurs d'homme mort (19), dans lequel un organe d'actionnement (11a, 11b) pour chaque interrupteur d'homme mort (19) est disposé dans la direction (2).

8. Chariot de manutention selon la revendication 7, **caractérisé en ce que** les interrupteurs d'homme mort (19) se trouvent en liaison active avec un dispositif de commande, dans lequel, lors de l'actionnement d'un organe d'actionnement (11a, 11b) au moyen du dispositif de commande, l'entraînement de déplacement est utilisable avec une vitesse de déplacement maximale réduite.

9. Chariot de manutention selon la revendication 7 ou 8, **caractérisé en ce que**, lors de l'actionnement des deux organes d'actionnement (11a, 11b) au moyen du dispositif de commande, l'entraînement de déplacement est utilisable avec une vitesse de déplacement maximale.

10. Chariot de manutention selon l'une quelconque des revendications 7 à 9, **caractérisé en ce que**, lors de l'actionnement des deux organes d'actionnement (11a, 11b) puis du relâchement d'un organe d'actionnement (11a, 11b) au moyen du dispositif de commande, l'entraînement de déplacement reste utilisable avec la vitesse de déplacement maximale.

11. Chariot de manutention selon l'une quelconque des revendications 7 à 10, **caractérisé en ce que**, lors du relâchement des deux organes d'actionnement (11a, 11b) au moyen du dispositif de commande, le dispositif de freinage peut être activé pour le freinage du chariot de manutention.
